# EUROPEAN PATENT APPLICATION

(11) **EP 3 835 245 A1**
(43) Date of publication of application: **16.06.2021**
(21) Application number: 19215480.5
(22) Date of filing: 12.12.2019
(51) Int. Cl.: B66B 1/24

(54) **METHOD TO IMPROVE ELEVATOR SECURITY**

(71) Applicant: thyssenkrupp Elevator Innovation and Operations AG, 45143 Essen (DE)
(72) Inventor: Calisi, Michael, Boca Raton FL, GA Georgia 33428 (US); Masghouni, Nejib, Chamblee, GA Georgia 30341 (US); Evert, Andrew, Atlanta, GA Georgia 30339 (US)
(74) Representative: Jacobi, Nicolas

(57) **Abstract**

The present invention refers to a method of improving elevator and building security. In particular, the method refers to a method of prioritizing passenger travel to one or more serviced floors in a building wherein the number of floors comprise at least high security floors and low security floors.

## Description

The invention refers to a method of improving elevator and building security. In particular, the method refers to a method of prioritizing passenger travel to one or more serviced floors in a building wherein the number of floors comprise at least high security floors and low security floors.

Modern day elevators are becoming more and more intelligent. There are various systems used for example to identify and count the number of passengers; to detect the presence of a passenger; to make the elevator more passenger friendly, be it via smart technology and touchscreens. Due to the ever-increasing population and the constant expansion of cities, the need for tall buildings is a constant in the ever-changing urbanization of today's world. The elevators needed to service these buildings are thus required to be more robust and more intelligent than ever before in order to accommodate the busy people of today's world.

US20160311646 A1 describes a system capable of recognizing the elevator passenger's face which then sends a signal to the elevator control system to move the elevator car to the elevator passenger's authorized floor destination. When more than one passenger is present in the elevator however, there is no way of preventing a passenger from leaving the elevator at a floor for which they have no authorization. Thus, the security of the building and the people therein can be compromised.

It is an object of the invention to address this security concern and provide a means of preventing a person in an elevator cabin from reaching a floor of a building for which they have no authorization.

This object is solved by a method according to claim one and a use according to claim nine, with further refinements described in the dependent claims and following description.

### Embodiments

The invention refers to a method of prioritizing passenger travel to one or more serviced floors in a building via an elevator system having an elevator cabin, wherein the number of floors comprise at least:
- high security floors, including top security floors;
- medium security floors;
- low security floors, wherein low security floors can include general public floors.

In an embodiment of the invention, any one or more of the group comprising:
- businesses,
- hotels,
- apartments,
- penthouse suites,
- secure areas or
- any other form of undertaking
can be located on one or more floors of the building. Preferably each floor has its own assigned security status. In certain cases, some floors can have the same security status as others, e.g., different floors within a business to allow employees to travel between floors uninterrupted. It is also possible that for example, within one business there may be different levels of security, in which case, various security statuses can be assigned to one or more floor as desired.

Preferably the method comprises the steps of:
a. identifying a passenger, wherein said passenger has a security clearance according to at least one floor of the building. It is possible for a passenger to have more than one security clearance. If a passenger is without a security clearance, then preferably said passenger is able to only travel to general public floors. Identification is preferably carried out via an identification device.
b. recognizing and verifying the security clearance of the passenger. This is preferably carried out by establishing a co-operation between the identification device and a control unit of the elevator system. The control unit is preferably adapted with software that allows it to identify and recognize the security clearance of a passenger. This data can then be matched to a database of stored security clearances.
c. assigning the security clearance to the relevant floor;
wherein when more than one passenger is present,
d. a prioritizing sequence is performed for the relevant floors according to the security clearance. Preferably the prioritizing sequence is the application of an algorithm to the data already gathered by the identification device and the control unit;
e. initiating a travel route of the elevator to the relevant floor according to the priority sequence, preferably in the order of ascending security, i.e., low security/general public use floors first. If for example, the top security floors are located on the lower floors of a building, the elevator cabin will preferably bypass these floors during the prioritized travel route.
This method advantageously provides an elevator having improved intelligence, and thereby improves personal safety of people in a building as it prevents unauthorized persons from arriving at and entering floors of a building for which they have no security clearance.

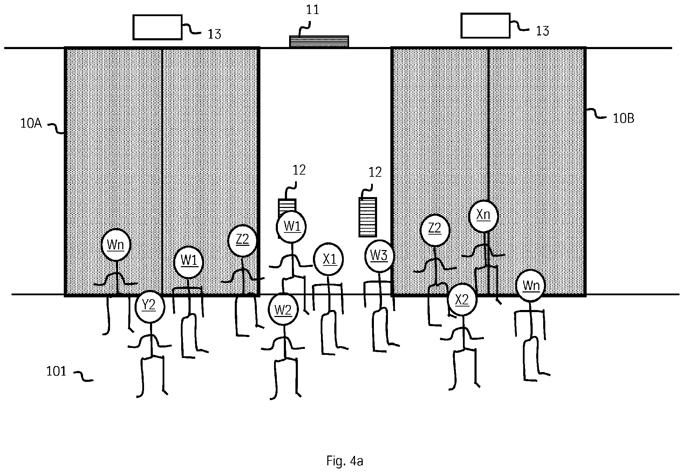

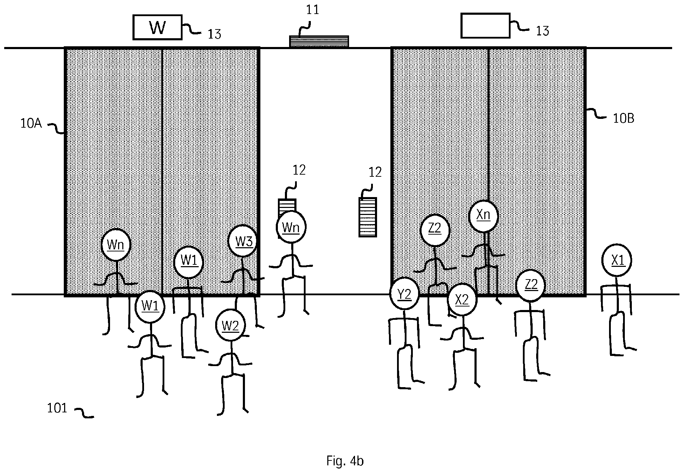

In an embodiment of the invention, the method is preferably applied:
- inside an elevator cabin; or
- outside an elevator cabin, for example, in a waiting area or landing area, or lobby area. This advantageously saves time for passengers since those passengers with one particular security clearance can enter one particular cabin and arrive at their respective floors without having to wait until the other passengers having different security clearances are transferred to their respective floors. This is explained in more detail in the figure description of figs. 4a and 4b; or
- both inside and outside an elevator cabin. For example, the method can be applied as passengers wait in a lobby area of a building to enter an elevator cabin, and then it can be applied at least once again after all passengers are inside the cabin and before it begins to travel. This advantageously provides a two-tier security mechanism, which thus improves the overall security within a building. This also improves passenger satisfaction and can help extend the lifetime of the elevator as it avoids superfluous travel.

In an embodiment of the invention, the method is performed via the implementation of a piece of software comprised in
- a control unit of the elevator; or
- an external piece of hardware that is connected to the control unit of the elevator. The method is preferably written as an algorithm. The algorithm can be e.g., downloaded to the control unit, or take the form of an external piece of hardware that is connected to the control unit. The connection between the external piece of hardware and the control unit can be via physical means e.g., through the use of a cable connection or via the cloud.

In an embodiment of the invention, identification of a passenger is performed using an identification device wherein said identification device uses at least one selected from the group comprising:
- ID registration, for example, reading an ID card which is required for use of the elevator, or required for entry into a building. The ID card may be on the person of the passenger and need not necessarily be shown to activate the elevator or when entering the elevator
- an image capturing device, e.g., a camera or any other device that can capture and use facial recognition or other means to identify a person;
- any other biometric identifier;
to identify a passenger and their associated security clearance or lack thereof. This advantageously provides a method that can be implemented with an elevator system having an existing intelligent recognition system.

In an embodiment of the invention, the floors of a building can have at least one of the following security clearances:
- top security
- high security;
- medium security
- low security;
- no security.

In an embodiment of the invention, each floor serviced by the elevator cabin has its own unique security clearance, wherein one or more floor may have the same security clearance. This advantageously ensures that for example an employee with a business that occupies more than one floor of a building is able to freely travel between floors.

In an embodiment of the invention, the elevator cabin preferably travels to floors having the same security clearance in ascending or descending order. For example, there are three floors having the security clearance X2, e.g., X2-1, X2-2, X2-3. If a passenger enters the cabin at floor X2 and the desired floor is X2-3, the elevator will stop at the desired floor X2-3 before continuing with the prioritized travel route. Likewise, if the desired floor is X2-1, the elevator will stop at the desired floor X2-1 before continuing with the prioritized travel route. This applies, even when the elevator has to change travel direction from upwards to downwards.

In an embodiment of the invention, when a passenger without a security clearance enters the elevator, the method comprises the further steps of:
- identifying a passenger wherein, said passenger is without a security clearance;
- optionally performing a re-prioritizing sequence. For example, the re-prioritizing sequence may cause that the order of serviced floors be altered so that the next floor to be serviced by the elevator is a floor with low or zero security rather than a floor with higher security.

In an embodiment of the invention, the method steps (a) to (e) are implemented each time at least one new passenger enters the elevator cabin. This advantageously ensures that a high degree of security is maintained throughout the operation and service life of the elevator.

Use of a method according to any of the preceding claims in a building. For example, one that requires a security system, or a high-security building. This advantageously provides a building with improved security.

### Figure Description

The invention is described in more detail with the help of the figures.
Figs. 1a and 1b show a schematic representation of a building having a number of floors which is serviced by an elevator, wherein the floors require various security clearances;
Figs. 2a and 2b show a schematic representation of a number of passengers in an elevator, wherein each passenger has a difference security clearance;
Fig. 3a shows a schematic representation of a building having a number of floors which is serviced by an elevator (elevator not shown);
Fig. 3b shows a schematic representation of a number of passengers in an elevator wherein each passenger has a difference security clearance;
Fig. 4a shows a schematic representation of a group of passengers waiting to travel on an elevator, wherein the security clearance varies throughout the group;
Fig. 4b shows a schematic representation of a group of passengers waiting to travel on an elevator, wherein the security clearance varies throughout the group.

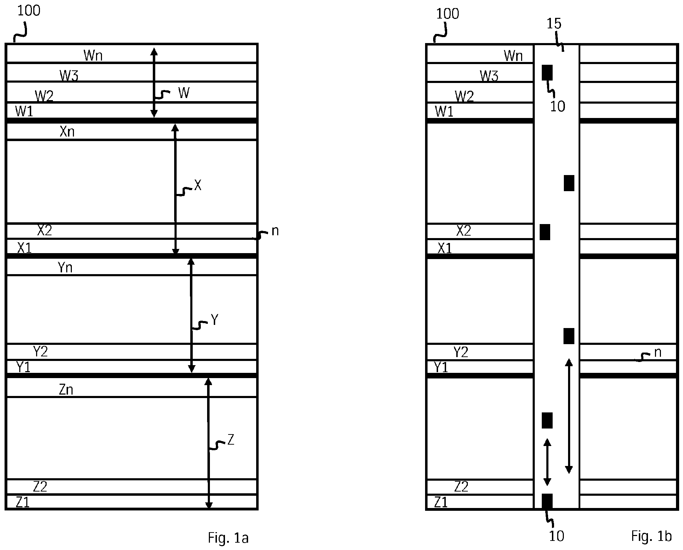

Fig. 1a shows a schematic representation of a building 100 having a number of floors n wherein said floors are divided according to their security clearance requirements. The low security floors, including floors open to the general public are assigned the security clearance of Z. The first two floors Z1, Z2 and the n^{th} Z floor Zn are shown. The **medium** security floors are assigned the security clearance of Y. The first two floors Y1, Y2 and the n^{th} Y floor Yn are shown.
The **high** security floors are assigned the security clearance of X. The first two floors X1, X2 and the n^{th} X floor Xn are shown.
The **top** security floors are assigned the security clearance of W. In this particular example, the top security floors are shown in the following order W1, W2, W3, Wn, wherein W1 has a lower security clearance than Wn. It is also possible that all top security floors have the same security clearance, e.g., W2.

In this particular example, the floors in each security clearance, i.e., W, X, Y, Z, have an ascending security clearance, i.e., X2 requires a higher clearance than X1, and Y2 requires a higher clearance than Y1. For the low security floors, Z1, Z2 are open to the general public, however Zn requires a security clearance.

Fig. 1b shows the building 100 as shown in fig. 1a comprising an elevator system having a number of elevator cabins 10 in the elevator shaft 15 servicing the various floors n. In this particular example, several elevator cabins 10 are shown in the elevator shaft 15, however, any number of cabins 10 can be used, as can any number of elevator shafts 15 comprising any number of cabins 10.

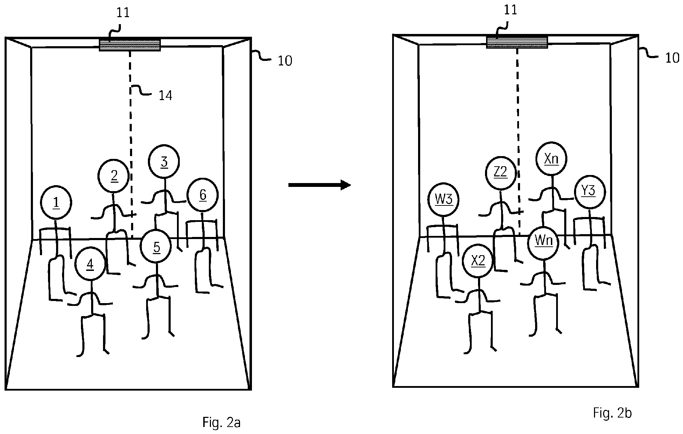

Fig. 2a shows an elevator cabin 10 wherein a number of passengers 1, 2, 3, 4, 5, 6 are standing. The elevator doors 14 are closed. An identification device 11 is located within the cabin 10. This device 11 identifies the passengers 1, 2, 3, 4, 5, 6, and through co-operation with a control unit of the elevator (not shown), wherein said control unit is adapted with software that allows it to identify and recognize the security clearance of a passenger, is able to assign the security clearance W, X, Y, Z of each passenger 1, 2, 3, 4, 5, 6, to the relevant floor n. It is possible for a passenger to have more than one security clearance, however in the examples provided, each passenger has only one security clearance.

Fig. 2b shows how the passengers 1, 2, 3, 4, 5, 6 of fig. 2a are identified via their respective security clearances W, X, Y, Z. Each passenger is travelling to a different floor with a different security clearance; W3, Z2, Xn, X2, Wn, Y3. By implementing the method according to the invention, a passenger with clearance X2 will not be able to travel to floor W2, likewise the passenger with clearance W2 will not be able to travel to floor Wn since the control unit of the elevator system has prioritized its travel route according to the security clearances of the passengers comprised within the cabin 10. If the passenger with the clearance Wn is first to enter the cabin 10 and first to input their destination, the control unit will wait until all destinations by all passengers have been entered, before prioritizing the order of floors accordingly and then preparing a travel route for the elevator cabin 10. As such, the passenger with the highest security clearance will be the last to depart the elevator cabin 10 and the passenger with no or the lowest security clearance will be the first to depart the elevator cabin 10. Should a passenger enter the elevator cabin 10 at a different floor during the original travel route of the elevator cabin 10, the method is re-applied to assign any new security clearance and re-prioritize the travel route accordingly. Since the top security floors occupy the top floors of the building 100 and the low security floors occupy the lowest floors of the building, with the middle and high security floors following in ascending order, the travel route of the elevator is relatively straightforward.

The order of passenger disembarkation is as follows:
- Z2, no security clearance is required for this floor, so the elevator 10 will stop first here;
- Y3, higher security clearance than Z2, but lower than the X floors;
- X2;
- Xn, since Xn is higher than X2;
- W3;
- Wn, this is the highest floor in the building 100 and also requires the highest security clearance.

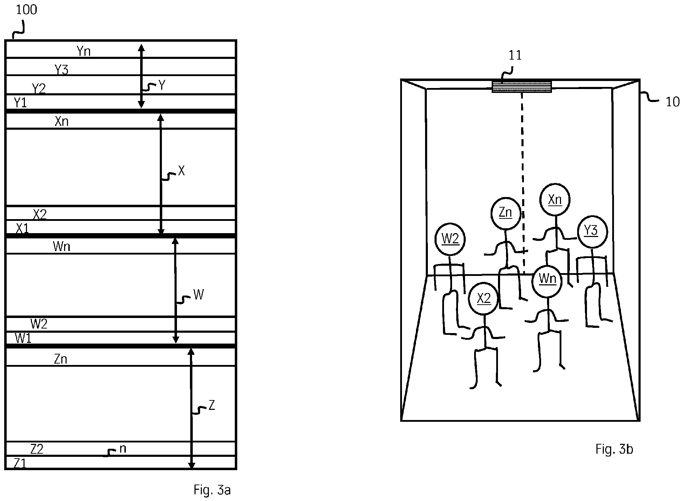

Fig. 3a shows a building 100 wherein the security clearances of the floors are not in ascending order, i.e., the top security floors W are located just above the low security floors, whilst the medium security floors Y occupy the top floors of the building 100. The passengers in the elevator cabin 10 of fig. 3b all have different security clearances. The identification device 11 located in the elevator cabin 10 identifies the passengers. By applying the method of the invention, the control unit (not shown), equipped with the required software, matches each identified passenger with their respective security clearance, assigns the clearances to the relevant floors W, X, Y, Z of the building 100 and prioritizes the travel route for the elevator accordingly. Should a passenger enter the elevator cabin 10 at a different floor during the original travel route of the elevator cabin 10, the method is re-applied to assign any new security clearance and re-prioritize the travel route accordingly.

Since the top/high security floors occupy the middle floors of the building 100 and the low/medium security floors occupy the lowest and highest floors of the building, the travel route of the elevator must change accordingly.

The order of passenger disembarkation is as follows:
- Zn, out of all the passengers in the cabin 10, this floor has the lowest security clearance, so the elevator 10 will stop first here;
- Y3, higher security clearance than Zn, but lower than the remaining X and W floors, thus the elevator will travel from the bottom of the building to the top of the building;
- X2;
- Xn, since Xn is higher than X2, thus the elevator 10 will travel downwards when serving both floors respectively;
- W2;
- Wn, this is the floor requiring the highest security clearance in the building 100. The elevator will continue to travel downwards to floor W2 after having serviced the X floors, and then travel upwards to service floor Wn.

In another embodiment of the invention, the method can also be carried out before a passenger enters the elevator cabin. This is shown in figures 4a and 4b. An identification device 11 is positioned so that it covers a waiting area 101 where passengers having various security clearances W, X, Y, Z are waiting to board one of elevators 10A or 10B. The identification device 11 identifies the passengers through co-operation with a control unit. The control unit is adapted with software that allows it to identify and recognize the security clearance of a passenger and assign the security clearance W, X, Y, Z of each passenger to the relevant floor n. When one particular security clearance is more prevalent, as shown in fig. 4a with the security clearance for floors W, the method of the invention provides for the control unit to assign a particular elevator 10A, 10B to service a particular floor n, or number of floors n having a particular security clearance W, X, Y, Z. In this example, there are more passengers with the security clearance W. The control unit, assigns the elevator 10A to service the floors having a W security clearance. This can be made known to waiting passengers by showing a "W" on the floor designator 13, or via an audio announcement, or via any other means to alert passengers to the destination of a particular elevator, in this case, elevator 10A. Once aware of this information, the passengers can re-position themselves before the correct elevator and wait for it's arrival, shown in fig. 4b.

When passengers destined for floors with security clearance W have entered the cabin of elevator 10A, the method according to the invention can be applied once again inside the cabin 10A in order to ensure that the various security clearances within the floors W are respected. Therefore, passenger Wn will arrive at their destination last, and passenger W1 will arrive at their destination first, regardless of the order of destination inputs by the passengers. This ultimately saves time for passengers since those with the security clearance W are able to arrive at their respective floors without having to wait until the other passengers having security clearances X, Y, Z are transferred to their respective floors. This improves passenger satisfaction and can also help extend the lifetime of the elevator as it avoids superfluous travel.

In an embodiment of the invention, not reflected in the figures, the method can be applied to an elevator that is already in transit when a passenger at a floor waiting area presses the elevator call button. An identification device 11 located to cover a waiting area 101 can identify said passenger, and through the control unit, assign the security clearance thereto. If that passenger has a clearance that matches the prioritized travel route of the elevator, the elevator can stop at the selected floor to admit the passenger. If the passenger has a security clearance that would cause a re-prioritizing of the travel route, then the elevator can optionally stop and perform a re-prioritizing sequence.

### Reference signs list

- 100: building
- 101: waiting area

- 1 - 6: passenger

- 10: elevator/cabin
- 10A, 10B: elevator
- 11: identification device
- 12: call button
- 13: floor designator
- 14: elevator doors
- 15: elevator shaft

- n: floor
- Wn: top security floors
- Xn: high security floors
- Yn: medium security floors
- Zn: low/zero security floors
- W1-W4: top security floors
- X1-X2: high security floors
- Y1-Y2: medium security floors
- Z1, Z2: low/zero security floors

## Claims

1. A method of prioritizing passenger travel to one or more serviced floors (n) in a building (100) via an elevator system having an elevator cabin (10), wherein the number of floors (n) comprise at least:
- high security floors (Xn);
- low security floors (Zn);
comprising the method steps of:
a. identifying a passenger (1, 2, 3, 4, 5, 6), wherein said passenger (1, 2, 3, 4, 5, 6) has a security clearance (X, Z) according to at least one floor (n) ;
b. recognizing [and verifying] the security clearance (X, Z);
c. assigning the security clearance (X, Z) to the relevant floor (Wn, Xn, Yn, Zn);
wherein when more than one passenger (1, 2, 3, 4, 5, 6) is present,
d. a prioritizing sequence is performed for the relevant floors (n) according to the security clearance (X, Z);
e. initiating a travel route of the elevator (10) to the relevant floor (n) according to the priority sequence;

2. The method according to claim 1 wherein it is applied:
- inside an elevator cabin (10); or
- outside an elevator cabin (10); or
- both inside and outside an elevator cabin (10).

3. The method according to any of the preceding claims, **characterized in that** it is performed via the implementation of a piece of software comprised in
- a control unit of the elevator (10); or
- an external piece of hardware that is connected to the control unit of the elevator (10).

4. The method according to any of the preceding claims, **characterized in that** identification of a passenger is performed using an identification device (11) wherein said identification device uses at least one selected from the group comprising:
- ID registration;
- an image capturing device;
- any other biometric identifier;
to identify a passenger and their associated security clearance (X, Z).

5. The method according to any of the preceding claims, **characterized in that** each floor (n) serviced by the elevator cabin (10) has its own unique security clearance (X, Z), wherein one or more floor (n) may have the same security clearance (X, Z).

6. The method according to any of the preceding claims, **characterized in that** the elevator cabin (10) travels to floors (n) having the same security clearance in ascending or descending order.

7. The method according to any of the preceding claims, **characterized in that** when a passenger (1, 2, 3, 4, 5, 6) without a security clearance (X, Z) enters the elevator (10), the method comprises the further steps of:
- identifying a passenger (1, 2, 3, 4, 5, 6);
- optionally performing a re-prioritizing sequence.

8. The method according to any of the preceding claims, **characterized in that** the method steps (a) to (e) are implemented each time at least one new passenger (1, 2, 3, 4, 5, 6) enters the elevator cabin (10).

9. Use of a method according to any of the preceding claims in a building.
